# EUROPÄISCHE PATENTANMELDUNG

(11) **EP 1 757 541 A1**
(43) Veröffentlichungstag der Anmeldung: **28.02.2007**
(21) Anmeldenummer: 05018657.6
(22) Anmeldetag: 27.08.2005
(51) Int. Cl.: B65G 47/71, B65G 47/84

(54) **Stückgutverteileranlage**

(71) Anmelder: CET Industrieanlagen GmbH, 68519 Viernheim (DE)
(72) Erfinder: Cambeis, Gerhard, 68519 Viernheim (DE)
(74) Vertreter: Schmid, Rudolf

(57) **Zusammenfassung**

Die Erfindung betrifft eine Stückgutverteileranlage (1) mit einer Zufuhrfördereinrichtung (2), mindestens zwei parallel geschalteten, an die Zufuhranschließenden Abgangsfördereinrichtungen (3, 4, 5), einer Steuerung, einem von der Steuerung gesteuerten Motor (13), mindestens einem Betätigungselement (7, 8) und einem vom Motor (13) drehbar angetriebenen Karussellelement (9). Eine Erfassungseinrichtung für zugeführte Stückgüter und eine Führung (23) sind vorgesehen und das mindestens eine Betätigungselement (7, 8) ist an der Führung (23) im wesentlichen senkrecht verschieblich zur Förderrichtung geführt.

## Beschreibung

Die Erfindung betrifft eine Stückgutverteileranlage mit den Merkmalen des Oberbegriffs von Anspruch 1.

Stückgutverteileranlagen werden zum Verteilen von Stückgütern mit unterschiedlicher Bestimmung oder zum gesteuerten Beladen von Paletten herangezogen. An Stückgutverteileranlagen werden hinsichtlich Geschwindigkeit und Zuverlässigkeit hohe Anforderungen gestellt.

Bekannt ist aus der DE-36 24 411 A1 eine Stückgutverteileranlage zum Überschieben von Kästen und Kartons zwischen zwei parallel geschalteten Fördereinrichtungen mit einer Steuerung, einem von der Steuerung gesteuerten Motor und einem vom Motor drehbar angetriebenen Karussell mit schwenkbaren Überschiebeplatten. Zu den Nachteilen einer solchen Stückgutverteileranlage wird auf die Beschreibung der DE-36 24 411 A1 verwiesen. Nachteilig bei der DE-36 24 411 A1 ist deren aufwändige Konstruktion bei beschränktem Verteilungsvermögen in nur eine Richtung ohne ausreichende Steuerungsmöglichkeit.

Aufgabe der Erfindung ist es, eine steuerbare Stückgutverteileranlage zu schaffen, die mit hoher Geschwindigkeit und Zuverlässigkeit einfach und effizient betreibbar ist.

Die Lösung erfolgt mit einer Stückgutverteileranlage mit den Merkmalen des Anspruchs 1.

Gemäß der Erfindung weist eine Stückgutverteileranlage eine Zufuhrfördereinrichtung, mindestens zwei parallel geschaltete, an die Zufuhr- anschließende Abgangsfördereinrichtungen, eine Steuerung, einen von der Steuerung gesteuerten Motor, mindestens ein Betätigungselement und ein vom Motor drehbar angetriebenes Karussellelement auf, wobei das mindestens eine Betätigungselement vom Karussellelement kreisförmig und damit auch quer zur Förderrichtung antreibbar ist. Erfindungsgemäß ist eine Erfassungseinrichtung für zugeführte Stückgüter vorgesehen und eine Führung für das mindestens eine Betätigungselement, wobei das mindestens eine Betätigungselement vom Karussellelement an der Führung im wesentlichen auch senkrecht verschieblich zur Förderrichtung führbar ist, so dass die dem mindestens einen Betätigungselement vom Karussellelement aufgeprägte kreisförmige Bewegung am Stückgut und über das Stückgut auf der Verteileranlage hinweg kontinuierlich erfolgen kann ohne zusätzlich zu steuernde, bewegliche Komponenten. Die erfindungsgemäße Stückgutverteileranlage ist mit der kontinuierlichen Bahn entlang der konstruktiv einfachen und damit kostengünstigen Führung für das mindestens eine Betätigungselement besonders bei hohen Geschwindigkeiten zuverlässig, verschleißfrei und vor allem auch geräuscharm zu betreiben.

Gemäß einer bevorzugten Ausgestaltung der Erfindung ist eine senkrechte Projektion der Führung auf die Ebene der Zufuhr- und Abgangsfördereinrichtungen kreisförmig für eine einfache Anordnung des mindestens einen Betätigungselements im Karussellelement.

Gemäß einer weiteren bevorzugten Ausgestaltung der Erfindung entspricht der von der Führung dem mindestens einen Betätigungselement aufgeprägte Hub maximal der Höhe des Stückguts, wobei vorteilhaft mit kleinerem Hub geringere Kräfte auf Betätigungs- und Karussellelement wirken.

Gemäß einer weiteren bevorzugten Ausgestaltung der Erfindung ist koaxial zum mindestens einen Betätigungselement eine Druckfeder vorgesehen, mit der das mindestens eine Betätigungselement vom Karussellelement einfach und kontinuierlich gegen die Führung gespannt ist.

Gemäß einer weiteren bevorzugten Ausgestaltung der Erfindung ist das mindestens eine Betätigungselement drehbar zum Karussellelement und relativ zu einem feststehenden Getriebeelement des Antriebs für das Karussellelement so geführt, dass das Betätigungselement - auch wenn das Karussellelement sich dreht - relativ zur Förderrichtung immer dieselbe Winkelstellung beibehält für kontinuierliches Überschieben mit einer am Stückgut vorzugsweise ständig plan anliegenden Platte des mindestens einen Betätigungselements.

Gemäß einer weiteren bevorzugten Ausgestaltung der Erfindung ist ein Endstellungsschalter für das Betätigungselement vorgesehen und die Steuerung für den Motor des Karussellelements vom Endstellungsschalter steuerbar, so dass das mindestens eine Betätigungselement nach einem Arbeitsgang wieder in der Ausgangsstellung positionierbar ist.

Gemäß einer weiteren bevorzugten Ausgestaltung der Erfindung sind zwei sich paarweise gegenüber stehende Betätigungselemente vorgesehen für einfaches Verteilen von Stückgut auf drei Abgangsfördereinrichtungen, von denen zwei im wesentlichen symmetrisch angeordnet sind zu einer zentralen durchgängigen Abgangsfördereinrichtung.

Gemäß einer weiteren bevorzugten Ausgestaltung der Erfindung ist das unabhängig von den Fördereinrichtungen positionierbare Karussellelement mit dem mindestens einen Betätigungselement sowohl im als auch gegen den Uhrzeigersinn antreibbar für wahlweises Verteilen auf entgegengesetzt angeordnete Abgangsfördereinrichtungen.

Gemäß einer weiteren bevorzugten Ausgestaltung der Erfindung ist die Steuerung programmierbar für unterschiedliche Verteilaufgaben.

Die Erfindung wird im Folgenden anhand eines bevorzugten Ausführungsbeispiels dargestellt. Es zeigen:
- Fig. 1:: eine schematische Draufsicht auf eine Stückgutverteileranlage mit einer Zufuhr- und drei parallel geschalteten Abgangsfördereinrichtungen gemäß der Erfindung,
- Fig. 2:: eine Seitenansicht der Stückgutverteileranlage gemäß der Erfindung und
- Fig. 3:: eine Ansicht der Stückgutverteileranlage gemäß der Erfindung in Förderrichtung.

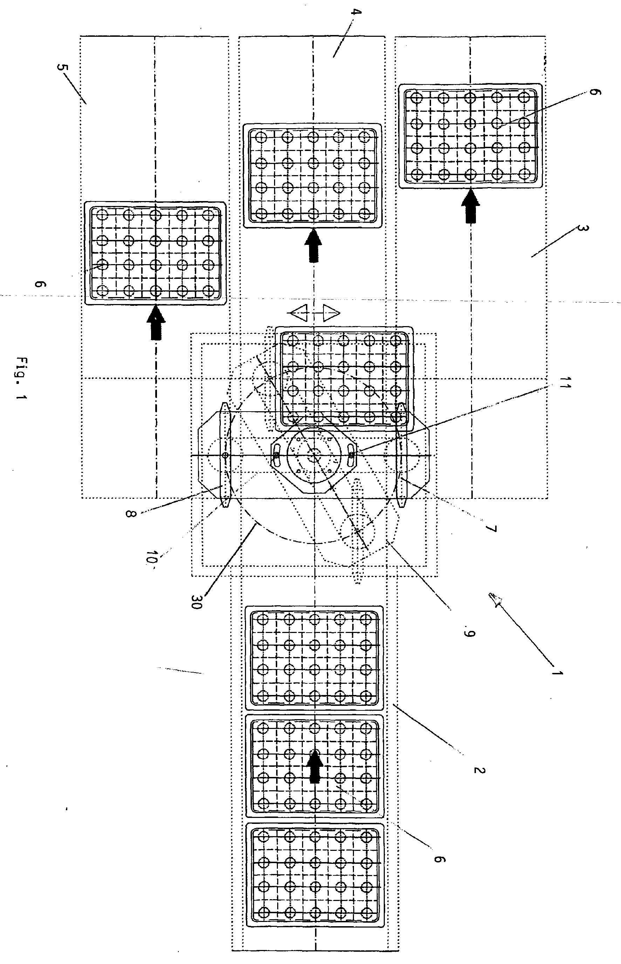

Fig. 1: Eine Stückgutverteileranlage 1 weist eine Zufuhrfördereinrichtung 2 und drei parallel geschaltete, an die Zufuhr- anschließende Abgangsfördereinrichtungen 3, 4, 5 auf. Auf der rollenbestückten Zufuhreinrichtung 2 wird Stückgut in Form von Flaschenkisten 6 in Pfeilrichtung auf herkömmliche Weise angefördert und in Abhängigkeit von einer Steuerung (nicht dargestellt) wahlweise auf die Abgangsfördereinrichtungen 3, 4, 5 verteilt mittels zwei sich in Förderichtung an der Zufuhreinrichtung 2 gegenüberstehenden Betätigungselementen 7, 8, die von einem motorisch drehbar angetriebenen Karussellelement 9 entlang eines Kreises 30 und damit auch quer zur Förderrichtung mit einer Reichweite bis zur benachbarten Abgangsfördereinrichtung 3 oder 5 bewegbar sind. Die Stückgutverteileranlage 1 ist im wesentlichen aus Metall gefertigt.

Seitlich an Zufuhreinrichtung 2 ist eine optische Erfassungseinrichtung (nicht dargestellt) für zugeführte Stückgüter 6 vorgesehen, die mit der Steuerung verbunden ist und in Abhängigkeit von erfassten Stückgütern 6 und einem vorgegebenen Programm das Karussellelement 9 steuert. Senkrecht zur Förderichtung an der Zufuhreinrichtung 2 sich gegenüberstehende Endstellungsschalter 10, 11 weisen dem Karussellelement 9 eine Endstellung zu, in der die Betätigungselemente 7, 8 nicht in die Förderung des Stückguts 6 eingreifen und z. B. Flaschenkisten 6 von der Zufuhreinrichtung 2 auf die mittlere Abgangsfördereinrichtung 4 weitergeleitet werden. Weist die Steuerung erfasste Stückgüter 6 einer der seitlichen Abgangsfördereinrichtungen 3, 5 zu, wird das Karussellelement 9 angetrieben und eines der mitgeschleppten Betätigungselemente 7, 8 kommt seitlich in Anlage an das erfasste Stückgut 6 und schiebt es quer zur Förderrichtung zu der seitlichen Abgangsfördereinrichtung 3 oder 5.

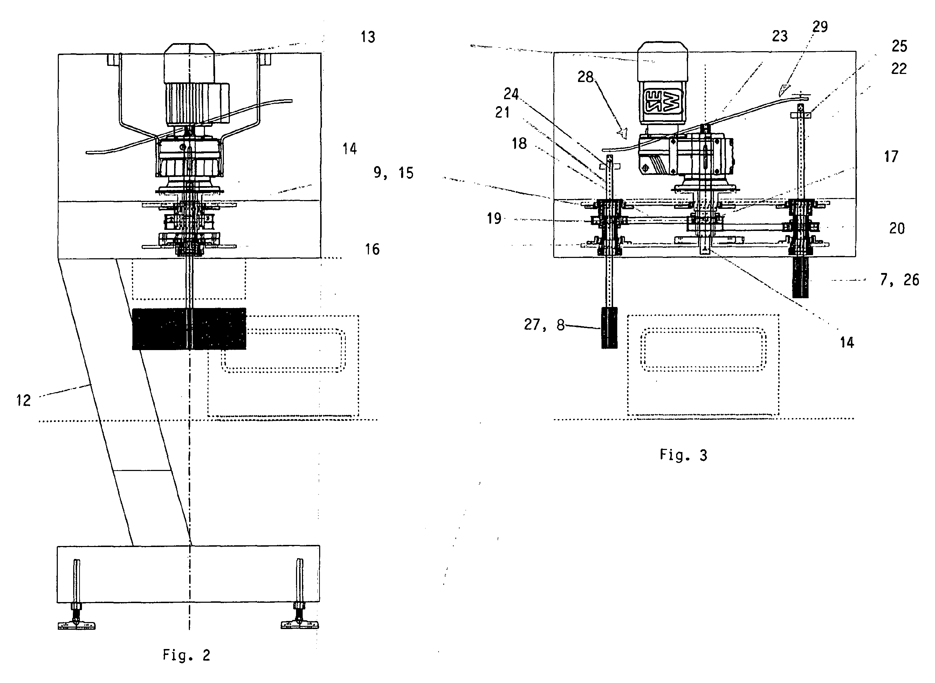

Fig. 2, 3: Entsprechende Merkmale sind mit den Bezugszeichen aus Fig. 1 bezeichnet. Das drehbar angetriebene Karussellelement 9 ist an einem selbsttragenden Ständer 12 über und unabhängig von Zufuhr- und Abgangsfördereinrichtungen 2, 3, 4, 5 der Stückgutverteileranlage 1 positionierbar. Ein von der Steuerung gesteuerter elektrischer Motor 13 ist mit einer zentralen Antriebswelle 14 versehen, auf der obere und untere Karussellbalken 15, 16 fest gelagert sind, so dass sich das Karussellelement 9 mit der zentralen Antriebswelle 14 dreht. Koaxial zur zentralen Antriebswelle 14 ist ein feststehendes Ritzel 17 vorgesehen, auf dem ein Zahnriemen oder Kettenantrieb 18 gehalten ist, der äußere Räder 19, 20 hält. Die äußeren Räder 19, 20 sind drehfest auf Profilelementen 21, 22 der Betätigungselemente 7, 8 montiert, die drehbar aber in ihrer axialen Richtung verschieblich in den oberen und unteren Karussellbalken 15, 16 des Karusellelements 9 kugelgelagert sind. Dreht sich das Karusellelement 9, werden die Profilelemente 21, 22 mit den Betätigungselementen 7, 8 von Zahnriemen oder Kettenantrieb 18 so gehalten, dass deren Winkelposition über eine gesamt Drehung des Karusellelements 9 von 360° relativ zur Förderrichtung unverändert bleibt, wobei sich die Profilelemente 21, 22 mit den Betätigungselementen 7, 8 relativ zum Karusellelement 9 um 360° drehen.

Die Profilelemente 21, 22 liegen mit ihren oberen Enden an einer Führung 23 an, deren senkrechte Projektion auf die Ebene der Zufuhr- und Abgangsfördereinrichtungen 2, 3, 4, 5 kreisförmig ist. Koaxial zu den Profilelementen 21, 22 zwischen dem oberen Karussellbalken 15 und Anschlägen 24, 25 sind vorgespannte Druckfedern angeordnet, die die Betätigungselemente 7, 8 gegen die Führung 23 drücken und den Betätigungselementen 7, 8 einen vertikalen Hub aufprägen, der maximal der Höhe des Stückguts 6 entspricht, wobei die Betätigungselemente 7, 8 in einem relativ zur Förderrichtung vorderen Abschnitt 28 ihrer von dem Karussellelement 9 bestimmten Kreisbahn so tief verlaufen, dass Platten 26, 27 an den unteren Enden der Profilelemente 21, 22 an den Stückgütern 6 anliegen und diese verschieben können und die Betätigungselemente 7, 8 in einem relativ zur Förderrichtung hinteren Abschnitt 29 ihrer von dem Karussellelement 9 bestimmten Kreisbahn so hoch verlaufen, dass die Platten 26, 27 an den unteren Enden der Profilelemente 21, 22 ohne Eingriff über die Stückgüter 6 hinweg verlaufen.

### Verfahren zum Betrieb der Stückgutverteileranlage 1

Von der Erfassungseinrichtung erfasste Stückgüter 6 von der Zufuhreinrichtung 2 werden in Abhängigkeit von einem vorgegebenen Programm auf die Abgangsfördereinrichtungen 3, 4, 5 verteilt, indem der von der Steuerung gesteuerte elektrische Motor 13 das Karussellelement 9 so antreibt, dass bei Durchlauf von Stückgut 6 das Karussellelement 9 in der von den Endstellungsschaltern 10, 11 zugewiesenen Endstellung verbleibt und Stückgut 6 ungehindert von der Zufuhreinrichtung 2 auf die Abgangsfördereinrichtung 4 weitergeleitet wird. Weist die Steuerung erfasste Stückgüter 6 der seitlichen Abgangsfördereinrichtung 3 zu, wird das Karussellelement 9 entgegen dem Uhrzeigersinn angetrieben und Betätigungselement 8 kommt seitlich in Anlage an das erfasste Stückgut 6 und schiebt es quer zur Förderrichtung zu der seitlichen Abgangsfördereinrichtung 3. Weist die Steuerung erfasste Stückgüter 6 der seitlichen Abgangsfördereinrichtung 5 zu, wird das Karussellelement 9 im Uhrzeigersinn angetrieben und Betätigungselement 7 kommt seitlich in Anlage an das erfasste Stückgut 6 und schiebt es quer zur Förderrichtung zu der seitlichen Abgangsfördereinrichtung 5. Die jeweils vom Karussellelement 9 mitgeschleppten passiven Betätigungselement 7, 8 werden von den vorgespannten Druckfedern gegen die Führung 23 im relativ zur Förderrichtung hinteren Abschnitt 29 gedrückt, so dass die Platten 26, 27 an den unteren Enden der Profilelemente 21, 22 so hoch verlaufen, dass sie ohne Eingriff über die Stückgüter 6 hinweg verlaufen.

## Patentansprüche

1. Stückgutverteileranlage (1) mit
einer Zufuhrfördereinrichtung (2),
mindestens zwei parallel geschalteten, an die Zufuhranschließenden Abgangsfördereinrichtungen (3, 4, 5), einer Steuerung,
einem von der Steuerung gesteuerten Motor (13), mindestens einem Betätigungselement (7, 8) und
einem vom Motor (13) drehbar angetriebenen Karussellelement (9),
**dadurch gekennzeichnet, dass**
eine Erfassungseinrichtung für zugeführte Stückgüter und eine Führung (23) vorgesehen sind und das mindestens eine Betätigungselement (7, 8) an der Führung (23) im wesentlichen senkrecht verschieblich zur Förderrichtung führbar ist.

2. Stückgutverteileranlage (1) gemäß Anspruch 1, **dadurch gekennzeichnet, dass** eine senkrechte Projektion der Führung (23) auf die Ebene der Zufuhr- und Abgangsfördereinrichtungen (2, 3, 4, 5) kreisförmig ist.

3. Stückgutverteileranlage (1) gemäß Anspruch 1, **dadurch gekennzeichnet, dass** der von der Führung (23) dem mindestens einen Betätigungselement (7, 8) aufgeprägte Hub maximal der Höhe des Stückguts (6) entspricht.

4. Stückgutverteileranlage (1) gemäß Anspruch 1, **dadurch gekennzeichnet, dass** koaxial zum mindestens einen Betätigungselement (7, 8) eine Druckfeder vorgesehen ist, mit der das Betätigungselement (7, 8) vom Karussellelement (9) gegen die Führung (23) spannbar ist.

5. Stückgutverteileranlage (1) gemäß Anspruch 1, **dadurch gekennzeichnet, dass** das mindestens eine Betätigungselement (7, 8) drehbar im Karussellelement (9) geführt ist.

6. Stückgutverteileranlage (1) gemäß Anspruch 5, **dadurch gekennzeichnet, dass** das mindestens eine drehbar zum Karussellelement geführte Betätigungselement so verbunden ist mit einem feststehenden Getriebeelement des Antriebs für das Karussellelement, dass das Betätigungselement auch bei Drehung des Karussellselement immer dieselbe Winkelstellung relativ zur Förderrichtung beibehält.

7. Stückgutverteileranlage (1) gemäß Anspruch 1, **dadurch gekennzeichnet, dass** ein Endstellungsschalter für das mindestens eine Betätigungselement (7, 8) vorgesehen ist und die Steuerung für den Motor (13) des Karussellelements (9) vom Endstellungsschalter steuerbar ist.

8. Stückgutverteileranlage (1) gemäß Anspruch 1, **dadurch gekennzeichnet, dass** zwei sich paarweise gegenüber stehende Betätigungselemente (7, 8) vorgesehen sind.

9. Stückgutverteileranlage (1) gemäß Anspruch 1, **dadurch gekennzeichnet, dass** das Karussellelement (9) mit dem mindestens einen Betätigungselement (7, 8) sowohl im als auch gegen den Uhrzeigersinn antreibbar ist.

10. Stückgutverteileranlage (1) gemäß Anspruch 1, **dadurch gekennzeichnet, dass** die Steuerung programmierbar ist.
